Europäisches Patentamt

(19) European Patent Office

Office européen des brevets

(11) EP 0 567 328 B1

(12) **EUROPEAN PATENT SPECIFICATION**

(45) Date of publication and mention
of the grant of the patent:
**10.03.1999 Bulletin 1999/10**

(51) Int. Cl.$^6$: **B41J 2/35**

(21) Application number: **93303130.4**

(22) Date of filing: **22.04.1993**

(54) **Recording apparatus**

Aufzeichnungsgerät

Appareil d'enregistrement

(84) Designated Contracting States:
**AT BE CH DE DK ES FR GB GR IE IT LI LU NL PT SE**

(30) Priority: **23.04.1992 JP 104776/92**

(43) Date of publication of application:
**27.10.1993 Bulletin 1993/43**

(73) Proprietor:
**CANON KABUSHIKI KAISHA
Tokyo (JP)**

(72) Inventors:
• **Hayasaki, Kimiyuki,
c/o Canon Kabushiki Kaisha
Ohta-ku, Tokyo (JP)**
• **Kikuta, Masaya,
c/o Canon Kabushiki Kaisha
Ohta-ku, Tokyo (JP)**
• **Katayama, Akira,
c/o Canon Kabushiki Kaisha
Ohta-ku, Tokyo (JP)**
• **Kishida, Hideaki,
c/o Canon Kabushiki Kaisha
Ohta-ku, Tokyo (JP)**

(74) Representative:
**Beresford, Keith Denis Lewis et al
BERESFORD & Co.
2-5 Warwick Court
High Holborn
London WC1R 5DJ (GB)**

(56) References cited:
**EP-A- 0 110 675**

• **SOVIET PATENTS ABSTRACTS Section EI, Week 8631, 23 December 1985 Derwent Publications Ltd., London, GB; Class U, AN 86-203339 & SU-A-1 200 388 (BALANOVSKI L. I.)**
• **PATENT ABSTRACTS OF JAPAN vol. 15, no. 319 (E-1100) 14 August 1991 & JP-A-03 117 913 ( NEC. CORP. ) 20 May 1991**
• **PATENT ABSTRACTS OF JAPAN vol. 16, no. 567 (E-1296) 8 December 1992 & JP-A-04 219 014 ( FUJITSU LTD ) 10 August 1992**
• **PATENT ABSTRACTS OF JAPAN vol. 15, no. 159 (E-1059) 22 April 1991 & JP-A-03 032 159 ( KONICA CORP. ) 12 February 1991**

## Description

The present invention relates to a recording apparatus having a plurality of integrated drive circuits (hereinafter referred to as drive ICs) of the order of several tens and having a plurality of recording elements corresponding to the length of a single line on which information is recorded, and specifically to a recording apparatus categorized as a line-type recording apparatus in which clock signal lines to the drive ICs are connected in a cascade configuration.

In addition, the present invention is preferable for forming an ink jet recording apparatus and a thermal printer, used as an output terminal for a word processor, a facsimile, a copying machine, a computer and the like, having heat generation elements used as recording elements.

In the prior art, many kinds of line-type recording apparatuses are known which comprise a linear array of a plurality of recording elements. The line-type recording apparatus has several tens of pieces of drive ICs on an identical board, which can generally drive a block of several tens of recording elements simultaneously. With respect to the installation of the drive ICs on the board, a method is known in which drive control signal lines for transmitting image data signals to be supplied to the drive ICs are connected to the first block to the final block of the drive ICs in cascade.

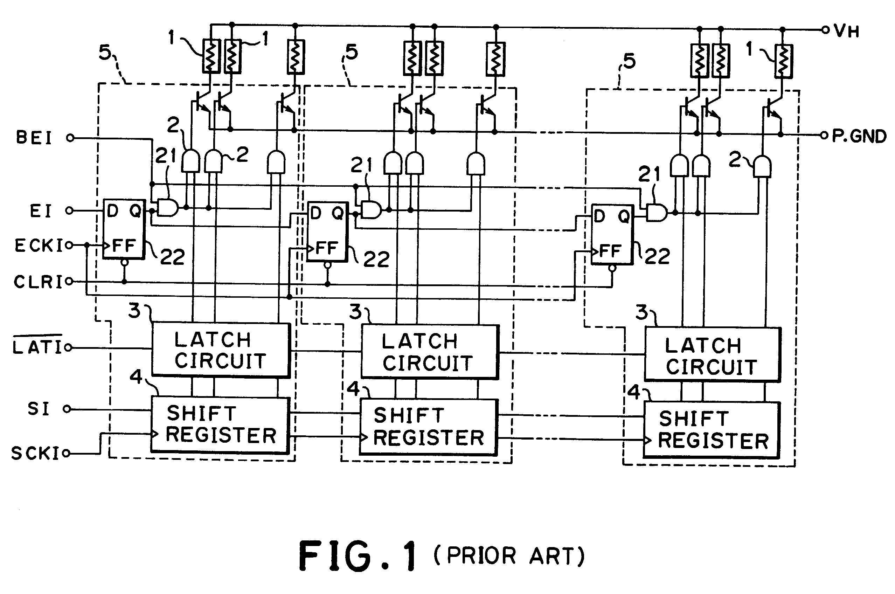

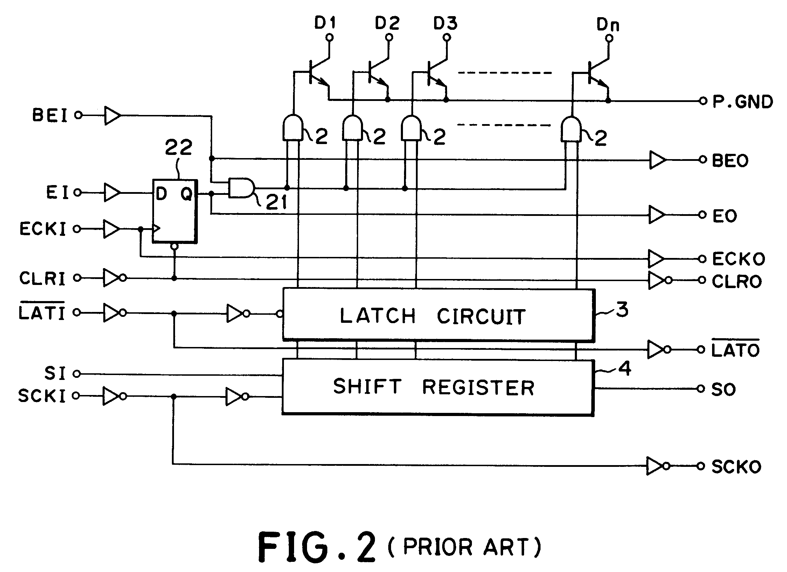

Fig. 1 shows a circuit structure of the line-type recording apparatus in the prior art described above, and Fig. 2 is a detailed structure of the inside of the drive IC enclosed by broken lines in Fig. 1. A reference numeral 1 designates a recording element, to which a recording current is fed in response to individual image data signals. A reference numeral 4 denotes a shift register, in which serial image data (SI) corresponding to a single line of recording elements are shifted sequentially with a transfer clock (SCKI). After the transfer of the image data, the image data are loaded into latch circuits 3 by a latch input (LATI) that triggers the latch circuits 3. So far, the image data are prepared for individual recording elements 1.

Now that the image data are prepared for the individual recording elements 1, recording currents are supplied to designated recording elements by activating gate circuits 2. In general, it is necessary to determine electric current supply conditions by considering the characteristics of the recording elements 1 and the recording apparatus itself. With respect to the recording elements 1, the pulse width of each supplied current is so determined that an optimal condition for current supply may be established when supplying the electric current. With respect to the recording apparatus, there is a method in which the recording elements are driven by group in order to distribute the power load applied to the recording elements. A reference numeral 22 in Figs. 1 and 2 denotes a D-type flip-flop circuit which enables to drive the recording elements by group, each group corresponding to an individual drive IC, in response to the group drive signal (EI) and the group drive signal transfer clock (ECKI). The logical AND of the pulse width (BEI) of electric current supplied to the recording element 1 and the output of the D-type flip-flop circuit 22 is obtained by a gate circuit 21 and an optimal recording current to the recording element is supplied through the gate circuit 21.

In order to increase the image recording speed, the frequency of the image data signal transfer clock (SCKI) for transferring serial image data corresponding to the number of the recording elements 1 is generally determined to be several MHz or more.

So far, by connecting drive control signal lines of drive ICs in cascade, a recording apparatus can be formed with a large number of recording elements, such as several thousand recording elements, arranged in a long single line.

However, in the prior art described above, a recording apparatus with a long-sized array of recording elements, which is formed by connecting drive control signal lines of drive ICs in cascade, requires the clock duty of the input and output waveforms that may change on the order of several nano-seconds, especially when a drive IC is used whose image data signal transfer clock frequency is about 10MHz. In addition, as the waveforms of input and output signals are susceptible to stray capacitance developed by wiring between the drive ICs, the clock duty of the input and output signals is gradually shifted to the "High" level or to the "Low" level in response to the characteristic of the drive ICs.

For example, assuming to form a recording apparatus having a long-sized array of recording heads for recording images on a A3-sized sheet with a resolution of 400 dpi, it is required to connect 74 drive ICs in cascade, each drive IC corresponding to a block of 64 recording elements. In such a recording apparatus, in the case where the clock duty of the image data signal transfer clock changes gradually, the waveform of the clock signal observed near the final stage of drive ICs may eventually be shifted and fixed at the "High" level or the "Low" level, which leads to failure of correct transmission of the image data.

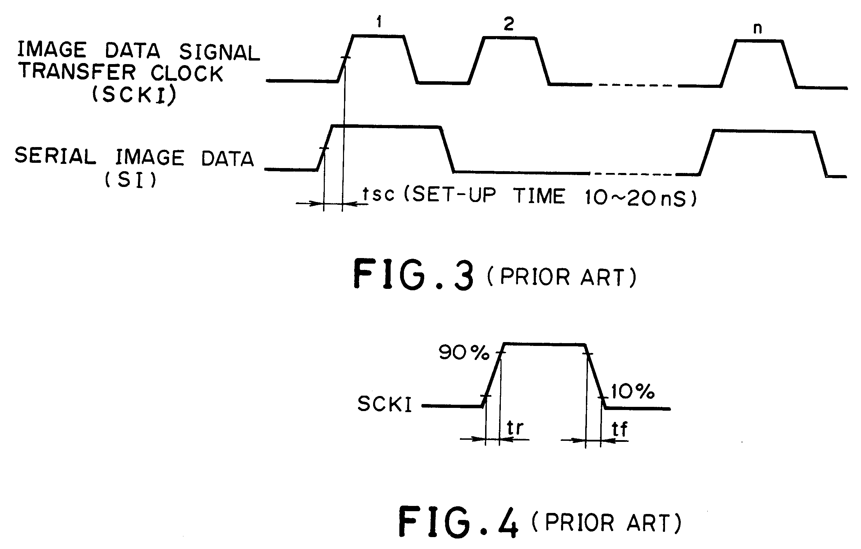

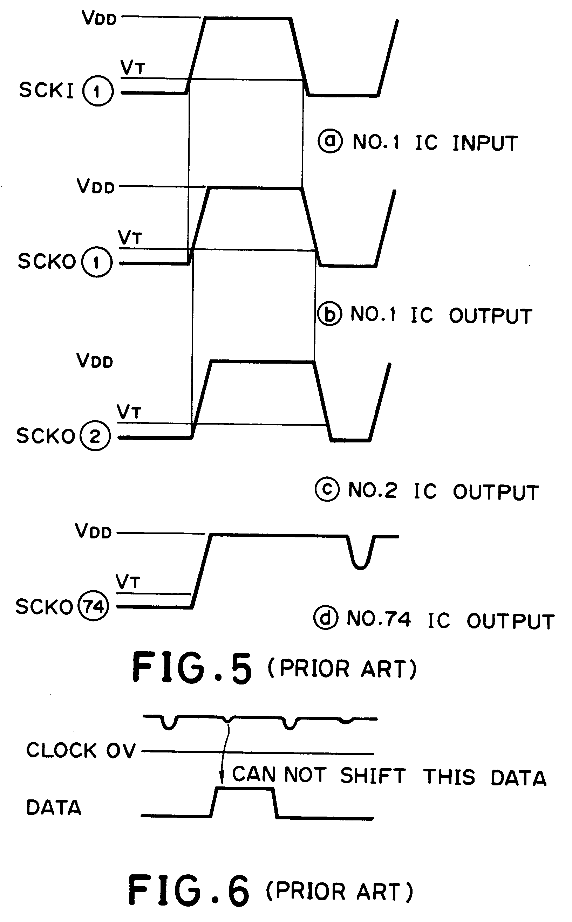

Figs. 3 to 6 illustrate switching waveforms of the serial image data (SI) and the image data signal transfer clock (SCKI) in order to illustrate the clock duty change in these signals. Fig. 3 shows a relationship between the image data SI and the clock signal SCKI of the shift register 4 in the drive IC, where "n" is the number of recording elements. When the clock signal SCKI is applied to the logic terminal of the drive IC, as shown in Fig. 4, the waveform of the output signal lengthens by the rise time tr and the fall time tf with respect to its original input signal. The circuit structure of the shift register 4 of the drive IC is shown in Fig. 2, where the clock signal SCKI is outputted through a couple of inverters. In the event that the threshold level at which the clock signal SCKI changes from Lower-level to Higher-level is, for example, between 2.1 V and 2.4 V which is less than $1/2V_{DD}$, the clock duty at High-level gradually increases as shown in Fig. 5. The details of this phenomenon will be described below.

In Fig. 5, $V_T$ is a threshold level corresponding to a single IC, and its value is assumed as follows:

$$V_T < 1/2V_{DD} \text{ [V], and}$$

$$V_{DD} = 5.0 \text{ [V]}.$$

When the clock signal SCKI-1 of the No. 1 drive IC changes from Low-level to High-level, the level of the clock signal SCKO-1 of the No. 1 drive IC begins to increase at the time when the level of the clock signal SCKI-1 reaches $V_T$. The time period required for the clock signal SCKO-1 of the No. 1 drive IC to change from Low-level to High-level, or from High-level to Low-level corresponds to the tr and tf (see Fig. 4) defined in the standard value of the drive IC. When, the level of SCKO-1 of the No. 1 drive IC reaches $V_T$, the level of SCKO-2 of the No. 2 drive IC begins to increase.

As discussed above, as the input waveform of the clock signal SCKI travels through the drive ICs connected in series, the duration during which the High-level signal is maintained lengthens, and hence the waveform of SCKI may be fixed at High-level. In the case where the waveform of SCKI is fixed at High-level completely, since data can not be shifted (sampled) until the next leading edge is developed, there may be failures in printing images such as a black noisy stripe is overlapped on the original image and even the whole recording area is painted in black. Thus, due to the phenomenon in which the input waveform of the clock signal SCKI changes while traveling through the drive ICs connected in series, the image data SI can not be shifted at the leading edge of the clock signal SCKI as shown in FIG. 6.

In order to solve the above problem, in the prior art recording apparatus having a long-sized recording head, the state in which the image data can not be transferred due to the clock duty change is avoided by dividing the input image data and the input image data transfer clock into two components, respectively, or by configuring only clock wiring in parallel. In either case, the cost of the recording apparatus formed in the above manner is relatively high because the increasing number of input terminals and conductive layers formed on the board is required.

It is an object of the present invention to provide a low-cost and highly reliable recording apparatus which enables to transfer image data to the recording elements in a simplified structure.

It is another object of the present invention to provide a recording apparatus which enables to transfer image data to a long-sized recording head with certainty.

It is a further object of the present invention to provide a recording apparatus which enables to reduce the number of signal lines to be connected to recording heads.

One aspect of the present invention provides a recording apparatus comprising:

a plurality of recording elements;
a plurality of drive ICs, connected in a cascade, each said drive IC having a plurality of drive signal lines as inputs, including a signal line for receiving an image data signal (SI) and a signal line for receiving a transfer clock signal (SCKI) which transfers said image data signal to a next one of said drive ICs, each of said drive ICs being configured for supplying a recording current selectively to at least a corresponding one of said recording elements according to said image data signal; and generating means for generating said transfer clock signal (SCKI);
characterised by
modifying means for modifying a duty ratio of the generated transfer clock signal (SCKI) supplied to said drive ICs so that the duty ratio of said transfer clock signal (SCKI) at a final drive IC in said cascade of drive ICs is sufficient to transfer said image data signal (SI).

Another aspect of the present invention provides a driving circuit for driving a recording head having a plurality of recording elements, the driving circuit comprising:

a plurality of drive ICs connected in a cascade, each said drive IC having a plurality of drive signal lines as inputs including a signal line for receiving an image data signal and a signal line for receiving a transfer clock signal which transfers said image data signal to a next one of said drive ICs, each of said drive ICs being configured for supplying a recording current selectively to at least a corresponding one of said recording elements according to said image data signal; and generating means for generating the transfer clock signal (SCKI);
characterised by
modifying means for modifying a duty ratio of the generated transfer clock signal (SCKI) supplied to said drive ICs so that the duty ratio of said transfer clock signal at a final drive IC of said cascade of drive ICs is sufficient to transfer said image data signal.

A further aspect of the present invention provides a method of driving a recording head having a plurality of recording elements using a driving circuit, wherein said driving circuit comprises a plurality of drive ICs connected in a cascade, each drive IC having a plurality of drive signal lines as inputs, including an image signal line and a transfer clock signal line, and each drive IC being connected to at least one recording element for supplying a recording current thereto according to signals on said image signal line, the method comprising the steps of

supplying an image data signal (SI) to said image signal line of a first drive IC of said cascade of drive ICs to cause said first drive IC to supply a recording current to the or each respective recording element, and generating and supplying a transfer clock signal (SCKI) to said transfer clock signal line to cause said image data signal (SI) to be transferred to a next one of said drive ICs of said cascade of drive ICs,
characterised in that
the step of supplying a transfer clock signal (SCKI) includes modifying a duty ratio of the generated transfer clock signal (SCKI) supplied to said drive ICs so that the duty ratio of said transfer clock signal (SCKI) at a final drive IC of said cascade of drive ICs sufficient to transfer said image data signal (SI).

In one embodiment of the present invention, the modifying means is assigned to every one block of the drive ICs or assigned to every set of a plurality of blocks of the drive ICs.

In another embodiment of the present invention, the transfer clock corrects the duty ratio in response to the state of the transfer clock at the output signal terminal of the final stage of the drive ICs or at the output signal terminal of every block of the drive ICs.

Since the modifying means corrects the duty ratio of the transfer clock which transfers the image data signal when supplying the transfer clock to the recording apparatus so that the duty ratio of the transfer clock at the output terminal from the final stage of the drive ICs is enough to transfer the image data signal, it will be appreciated that the image data can be transferred in a simplified structure of the recording apparatus and its circuits.

In addition, by means of connecting a clock duty control circuit for correcting the duty ratio of the transfer clock to every N-block (N≧1) of the drive ICs, it will be appreciated that clock duty changes can be reduced.

It may be allowed that the clock duty control circuit controls the correction of the clock duty ratio by monitoring the output signal of the transfer clock defined at the final stage of the drive ICs or at every N-block of the drive ICs.

As the transfer clock control circuit corrects a duty ratio of the transfer clock which transfer the image data when supplying the transfer clock to the recording apparatus so that a duty ratio of the transfer clock at the output terminal from the final stage of the drive ICs is enough to transfer the image data signal, it will be appreciated that the image data can be transferred in a simplified structure of the recording apparatus and its circuits, which enables to provide a low-cost and high-reliable recording apparatus.

And by correcting the clock duty at every N-block (N≧1) of the drive ICs, the clock duty changes can be reduced which enables reliable data transfer.

And furthermore, by correcting the clock duty ratio in responsive to the monitored signal of the transfer clock at the final stage of the drive IC or at every N-block of the drive ICs, the reliability of recording operation can be increased.

Embodiments of the present invention will now be described with reference to the drawings in which:

Fig. 1 is a circuit diagram showing a structure of a prior art recording apparatus;
Fig. 2 is a circuit diagram showing a circuit structure of a prior art drive IC in Fig. 1;
Fig. 3 is waveforms showing a principle relationship between a data signal SI and a clock signal SCK in a shift register in Fig. 2;
Fig. 4 is a waveform showing a change of clock signal SCK brought by a prior art drive IC;
Fig. 5 is waveforms showing a state of transitive changes of the input clock signal SCK as the signal passes through drive ICs;
Fig. 6 is waveforms showing a state in which a rise-up edge of the clock signal SCK can not shift the data SI due to the phenomenon illustrated in Fig. 5 in the prior art recording apparatus;
Fig. 7 is a circuit diagram showing a circuit structure of a recording apparatus in one embodiment of the present invention;
Figs. 8A and 8B are waveforms showing changes in clock duty in the embodiment of the present invention;
Fig. 9 is a waveform showing an example of a method for changing clock duty in the embodiment of the present invention;
Fig. 10 is a circuit diagram showing a circuit structure of a drive IC in another embodiment of the present invention;
Fig. 11 is a circuit diagram showing an example of the structure of a clock duty control circuit in the embodiment of the present invention; and
Fig. 12 is a circuit diagram showing another example of the structure of a clock duty control circuit in the embodiment of the present invention.

Now, referring to the accompanying drawings, embodiments of the present invention will be described.

A. First Embodiment:

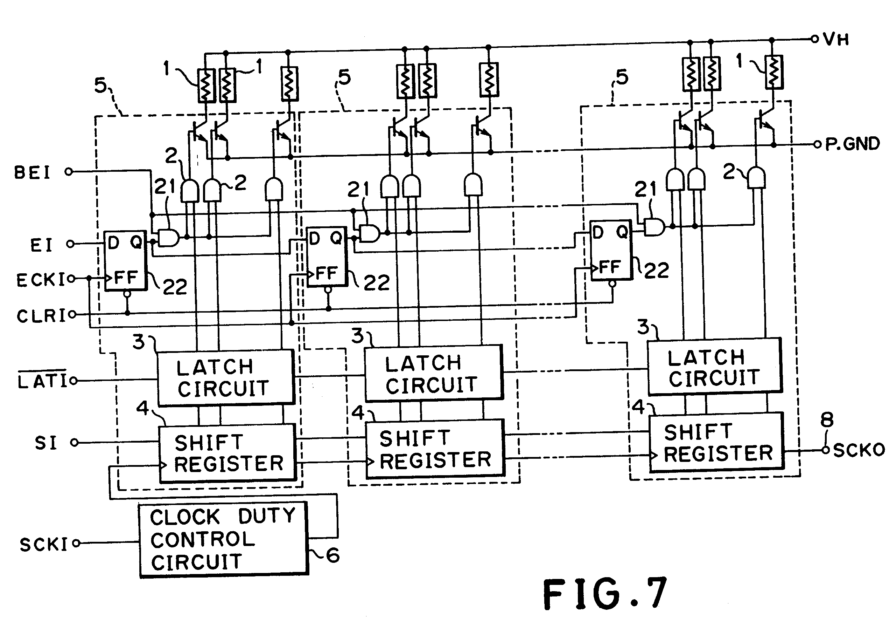

Fig. 7 shows a circuit structure of drive ICs in a recording apparatus in a first embodiment of the present invention. In Fig. 7, reference numeral 6 denotes a clock duty control circuit which is connected to a clock signal input terminal of the first stage shift register 4. The clock duty control circuit 6 modifies the duty ratio of the image data signal transfer clock SCKI such that the clock duty ratio of the image data signal transfer clock SCKO at an output terminal of the final stage shift register 4 of the drive ICs can transfer the image data signal SI.

The transfer clock signal SCKI is outputted from a clock generating circuit (not shown). The final stage shift register 4 is provided with an output terminal 8 to monitor the transfer clock signal SCKO.

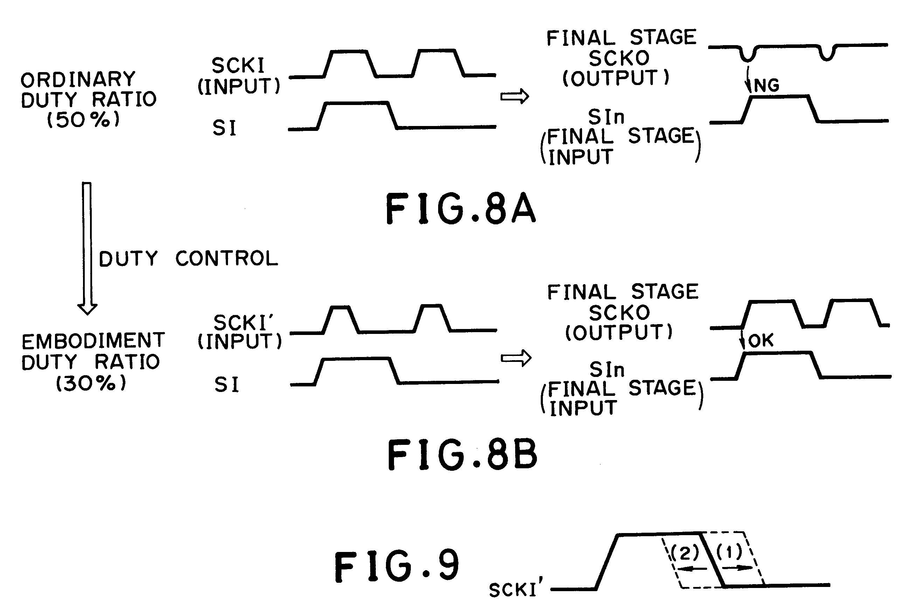

For example, in the case that the clock signal SCKO at the final stage is fixed at High-level with an ordinary duty ratio of 50% as shown in Fig. 8A, the clock duty ratio is modified to be 30% as shown in Fig. 8B. Practically, the clock duty is inevitably changed at the final stage of shift registers connected sequentially. Therefore, the clock duty of an input clock SCKI' is controlled by monitoring the output signal SCKO of the final stage, as shown in Fig. 8B, so that the output signal from the final stage of shift registers may be formed as a shiftable signal SCKO'. With this clock duty modification, image data can be transferred correctly.

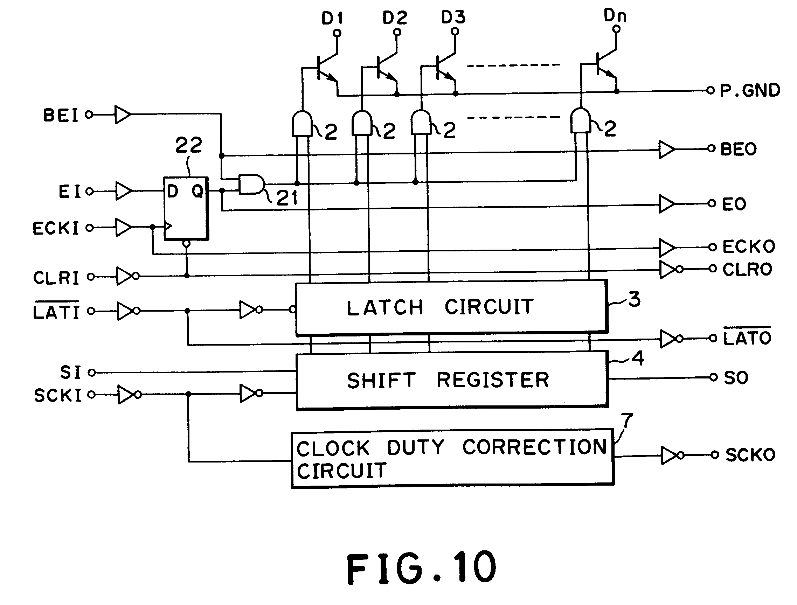

The clock duty control circuit 6 changes the pulse width of the clock by keeping the set-up time tsc to be constant in order to modify the clock duty as mentioned above. Though the same effect can be obtained by changing the rise time tr or the fall time tf of the clock, in this embodiment as shown in Fig. 9, the clock duty is modified by changing the pulse width by a one-shot multivibrator and so on or by adjusting the pulse width in designated values with a counter. In Fig. 9, (1) referring to the case that the clock waveform is fixed at the Low-level at the final stage of shift registers and (2) referring to the case that the clock waveform is fixed at the High-level at the final stage of shift registers indicate adjusting directions of the clock pulse width, respectively.

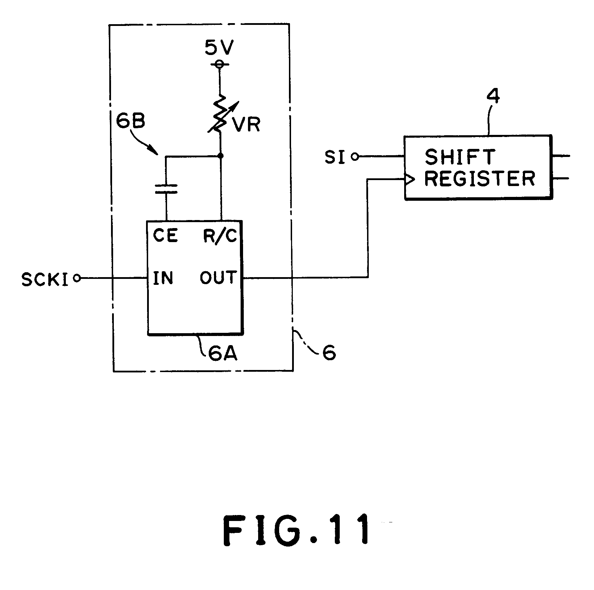

The clock duty control circuit 6 may be composed of, for example, a one-shot multivibrator IC 6A and a CR time constant circuit 6B connected outside to 6A as shown in Fig. 11. By changing the resistance $V_R$ of the CR time constant circuit 6B in order to modify the time constant, the clock duty can be controlled.

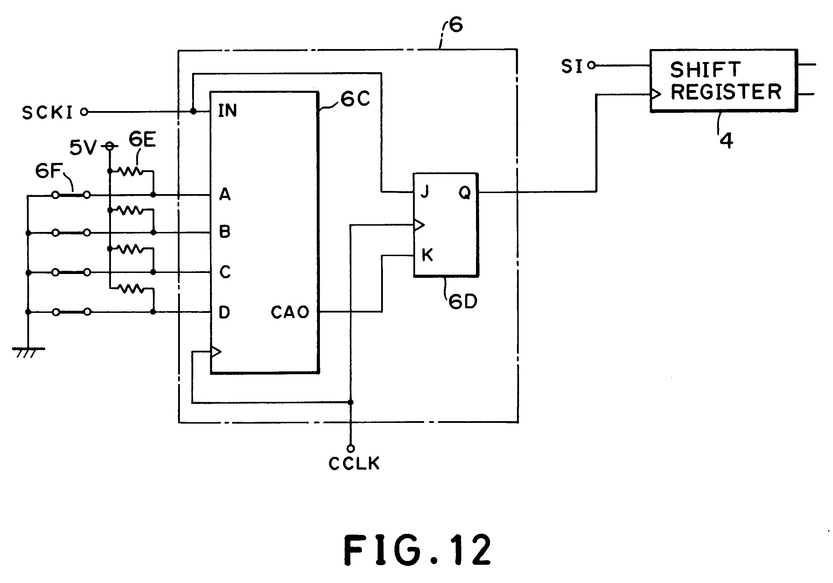

As shown in Fig. 12, it may be allowed that an n-bit (4-bit in this embodiment) counter 6C and a JK flip-flop (J/K FF) 6D are used as the clock duty control circuit 6. Preset terminals A to D of the counter 6C are connected to a pull-up resistance 6E and a wiring 6F for pattern cut, respectively. The counter 6C counts pulses of a counter clock CCLK the frequency of which is higher than the frequency of the image data signal transfer clock SCKI while the image data signal transfer clock SCKI is at High-level, and then supplies a carry signal from the CAO terminal at the time when the counted number of CCLK pulses reaches a value corresponding to a designated value defined by the pattern cut. As pull-up resistances 6E are connected to the preset terminals A to D, the preset terminal with its corresponding wiring 6F being cut is turned-on and kept at the High"1"-level. At the terminal Q of the J/K FF 6D, the output signal "1" is supplied when the terminal J, to which the image data signal transfer clock SCKI is supplied in synchronizing with the counter clock CCLK , is turned on with the signal "1", and the output signal from the terminal Q is turned off when the terminal K to which the carry is supplied is turned on with the signal "1". In other words, by varying the preset value with the designated pattern cut, the time period during which the output signal from the terminal Q is turned on with the High-level signal can be changed, and thus, the clock duty can be controlled.

Although, in the above embodiment, the output clock SCKO of the final stage shift register 4 is monitored, it may be possible to monitor the input clock SCKI of the final stage shift register 4. In brief, the clock SCK can be monitored anywhere it is possible to make sure that the image data signal (SI) of the final stage shift register 4 is certainly transferred (shifted).

B. Second Embodiment:

Fig. 10 shows a circuit diagram of a second embodiment of the present invention. In this embodiment, a clock duty correction circuit 7 is connected to every set of N blocks of drive ICs with N≧1, in which N is 1 in this embodiment. The image data transfer clock SCKI supplied at the clock input terminal is led to the shift register 4 through a couple of inverter circuits within the drive IC. The output from the first stage of the inverter circuit is also supplied to the clock duty correction circuit 7, and the output from the correction circuit 7 is led to a later inverter circuit, and also, the output SCKO from the later inverter circuit is connected to the input terminal SCKI of the next drive IC connected in cascade. With this circuit structure, a clock duty change generated in the drive IC or due to the capacitance of connection wirings is corrected at every drive IC.

As for the structure of the clock duty correction circuit 7, for example, what is preferable is such a structure as changing the clock duty by using a one-shot multivibrator and a CR time constant circuit connected outside to the one-shot multivibrator and by modifying the number of the time constant of the CR time constant circuit, like the first embodiment. In this case, it may be preferable to form the CR time constant circuit so as to select a designated time constant and to modify the clock duty by selecting an optimum time constant in responsive to the structure and mechanism of the recording apparatus. In addition, it may be possible to form input and output terminals for n-bit data in the correction circuit 7 and to connect a plurality of correction circuits with these input and output terminals in cascade. In either case, as the clock duty change can be corrected within the drive IC, it will be appreciated that a reliable recording apparatus can be established only by installing drive ICs into the recording apparatus.

## C. Another Embodiment:

In another embodiment of the present invention, the clock duty can be corrected by monitoring the output of the image data signal transfer clock at the final stage of drive ICs or at every set of N blocks of drive ICs installed on the recording apparatus.

In the circuit configuration used in this case, the clock duty in the clock duty correction circuit is changed in response to clock duty changes monitored at the final clock output or at individual clock outputs. In order to simplify the circuit configuration, for example, it may be allowed that the clock duty change is corrected by forming a designated number of wirings with their disconnection pattern being selectable at every drive IC and by disconnecting arbitrary wirings for establishing a designated connection pattern in correspondence to the characteristic of the recording apparatus.

The present invention can be applied to the recording apparatus using a drive IC having a complex circuit structure for enabling to record gray-scaled images as well as the recording apparatus described in the above embodiments. The present invention can be applied also to a recording apparatus using such an installation method for drive ICs as the wire-bonding method and the flip-chip method. In addition, the present invention is not limited to be applied selectively to a recording apparatus used for specific purposes or with specific recording resolutions.

The present invention can achieve distinct effect when applied to a recording head or a recording apparatus which has means for generating thermal energy such as electrothermal transducers or laser light, and which causes changes in ink by the thermal energy so as to eject ink. This is because such a system can achieve a high density and high resolution recording.

A typical structure and operational principle thereof is disclosed in US-A-4,723,129 and US-A-4,470,796, and it is preferable to use this basic principle to implement such a system.

This system is particularly suitable for the on-demand type apparatus. This is because the on-demand type apparatus has electrothermal transducers, each disposed on a sheet or liquid passage that retains liquid (ink), and operates as follows: first, one or more drive signals are applied to the electrothermal transducers to cause thermal energy corresponding to recording information; second, the thermal energy induces sudden temperature rise that exceeds the nucleate boiling so as to cause the film boiling on heating portions of the recording head; and third, bubbles are grown in the liquid (ink) corresponding to the drive signals. By using the growth and collapse of the bubbles, the ink is expelled from at least one of the ink ejection orifices of the head to form one or more ink drops. The drive signal in the form of a pulse is preferable because the growth and collapse of the bubbles can be achieved instantaneously and suitably by this form of drive signal. As a drive signal in the form of a pulse, those described in US-A-4,463,359 and US-A-4,345,262 are preferable. In addition, it is preferable that the rate of temperature rise of the heating portions described in U.S. patent No. 4,313,124 be adopted to achieve better recording.

The present invention can be also applied to a so-called full-line type recording head whose length equals the maximum length across a recording medium. Such a recording head may consists of a plurality of recording heads combined together, or one integrally arranged recording head.

It is further preferable to add a recovery system, or a preliminary auxiliary system for a recording head as a constituent of the recording apparatus because they serve to make the effect of the present invention more reliable. As examples of the recovery system, are a capping means and a cleaning means for the recording head, and a pressure or suction means for the recording head. As examples of the preliminary auxiliary system, are a preliminary heating means utilizing electrothermal transducers or a combination of other heater elements and the electrothermal transducers, and a means for carrying out preliminary ejection of ink independently of the ejection for recording. These systems are effective for reliable recording.

The number and type of recording heads to be mounted on a recording apparatus can be also changed. For example, only one recording head corresponding to a single color ink, or a plurality of recording heads corresponding to a plurality of inks different in color or concentration can be used. In other words, the present invention can be effectively applied to an apparatus having at least one of the monochromatic, multi-color and full-color modes. Here, the monochromatic mode performs recording by using only one major color such as black. The multi-color mode carries out recording by using different color inks, and the full-color mode performs recording by color mixing.

Furthermore, the ink jet recording apparatus of the present invention can be employed not only as an image output terminal of an information processing device such as a computer, but also as an output device of a copying machine including a reader, and as an output device of a facsimile apparatus having a transmission and receiving function.

The present invention has been described in detail with respect to various embodiments, and it will now be apparent from the foregoing to those skilled in the art that changes and modifications may be made without departing from the scope of the claims.

## Claims

1.    A recording apparatus comprising:

   a plurality of recording elements (1);

a plurality of drive ICs (5), connected in a cascade, each said drive IC (5) having a plurality of drive signal lines as inputs, including a signal line for receiving an image data signal (SI) and a signal line for receiving a transfer clock signal (SCKI) which transfers said image data signal to a next one of said drive ICs (5), each of said drive ICs (5) being configured for supplying a recording current selectively to at least a corresponding one of said recording elements according to said image data signal; and generating means for generating said transfer clock signal (SCKI);
characterised by
modifying means (6,7) for modifying a duty ratio of the generated transfer clock signal (SCKI) supplied to said drive ICs (5) so that the duty ratio of said transfer clock signal (SCKI) at a final drive IC in said cascade of drive ICs (5) is sufficient to transfer said image data signal (SI).

2. A recording apparatus as claimed in claim 1, characterised in that said modifying means (6,7) is located at an input of said cascade of drive ICs (5) and outputs the transfer clock signal (SCKI) to a first drive IC in said cascade of drive ICs (5).

3. A recording apparatus as claimed in claim 1 or claim 2, characterised in that said generating means is adapted to generate said transfer clock signal (SCKI) to have a duty ratio of 50%.

4. A recording apparatus as claimed in claim 1 or claim 2, characterised in that said modifying means (6,7) is adapted to modify said transfer clock signal (SCKI) to have a duty ratio of 30%.

5. A recording apparatus as claimed in claim 1 or claim 2, characterised in that said modifying means (6) comprises timer means for counting a period corresponding to a duty ratio from which an input timing of the generated transfer clock signal (SCKI) is to be modified.

6. A recording apparatus as claimed in claim 5, characterised in that said modifying means (6) comprises a one-shot multivibrator (6A) and a CR time constant circuit (6B) connected to said one-shot multivibrator (6A).

7. A recording apparatus as claimed in claim 5, characterised in that said modifying means (6) comprises a counter (6C) and a JK flip-flop (6D).

8. A recording apparatus as claimed in claim 7, characterised in that said counter (6C) has preset terminals (A to D) having the designated number of bits, said preset terminals (A to D) each being connected to a pull-up resistance (6E) and a pattern cut wiring (6F).

9. A recording apparatus as claimed in any one of claims 1 to 8, characterised by terminal means (8) for monitoring the transfer clock signal (SCKI) at least at the final drive IC of said cascade of drive ICs (5).

10. A recording apparatus as claimed in claim 9, characterised in that said modifying means (6) is adapted to modify said duty ratio of the generated transfer clock signal in dependence upon a result of monitoring at said terminal means (8).

11. A recording apparatus as claimed in claim 9 or claim 10, characterised in that said terminal means is located at an output of the final drive IC of said cascade of drive ICs.

12. A recording apparatus as claimed in claim 9 or claim 10, characterised in that said terminal means is located at an input of the final drive IC of said cascade of drive ICs (5).

13. A recording apparatus as claimed in any one of claims 1 to 8, characterised in that a single said modifying means (7) is assigned to a block of said drive ICs (5).

14. A recording apparatus as claimed in any one of claims 1 to 8, characterised in that one said modifying means (7) is assigned to each one of a plurality of blocks of said drive ICs (5).

15. A recording apparatus as claimed in any preceding claim, characterised in that said plurality of recording elements (1) are adapted to record by discharging ink, respectively.

16. A recording apparatus as claimed in claim 15, characterised in that said plurality of recording elements (1) are adapted to discharge ink, respectively, by utilizing thermal energy.

17. A recording apparatus as claimed in any one of claims 1 to 14, characterised in that said recording apparatus includes word processor means.

18. A recording apparatus as claimed in any one of claims 1 to 14, characterised in that said recording apparatus includes a facsimile means having a communication function.

19. A recording apparatus as claimed in any one of claims 1 to 14, characterised in that said recording apparatus includes copying means having a reading function.

20. A recording apparatus as claimed in any one of claims 1 to 14, characterised in that said recording apparatus includes calculator means having a calculating function.

21. A driving circuit for driving a recording head having a plurality of recording elements (1), the driving circuit comprising:

a plurality of drive ICs (5) connected in a cascade, each said drive IC (5) having a plurality of drive signal lines as inputs including a signal line for receiving an image data signal and a signal line for receiving a transfer clock signal which transfers said image data signal to a next one of said drive ICs (5), each of said drive ICs (5) being configured for supplying a recording current selectively to at least a corresponding one of said recording elements (1) according to said image data signal; and generating means for generating the transfer clock signal (SCKI); characterised by
modifying means (6,7) for modifying a duty ratio of the generated transfer clock signal (SCKI) supplied to said drive ICs (5) so that the duty ratio of said transfer clock signal at a final drive IC of said cascade of drive ICs (5) is sufficient to transfer said image data signal.

22. A driving circuit as claimed in claim 21, characterised in that said modifying means (6,7) is located at an input of said cascade of drive ICs (5) and outputs the transfer clock signal (SCKI) to a first drive IC in said cascade of drive ICs (5).

23. A driving circuit as claimed in claim 21 or claim 22, characterised in that said generating means is adapted to generate said transfer clock signal (SCKI) to have a duty ratio of 50%.

24. A driving circuit as claimed in claim 21 or claim 22, characterised in that said modifying means (6,7) is adapted to modify said transfer clock signal (SCKI) to have a duty ratio of 30%.

25. A driving circuit as claimed in claim 21 or claim 22, characterised in that said modifying means (6) comprises timer means for counting a period corresponding to a duty ratio from which an input timing of the generated transfer clock signal (SCKI) is to be modified.

26. A driving circuit as claimed in claim 24, characterised in that said modifying means (6) comprises a one-shot multivibrator (6A) and a CR time constant circuit (6B) connected to said one-shot multivibrator (6A).

27. A driving circuit as claimed in claim 25, characterised in that said modifying means (6) comprises a counter (6C) and a JK flip-flop (6D).

28. A driving circuit as claimed in claim 27, characterised in that said counter (6C) has preset terminals (A to D) having the designated number of bits, said preset terminals (A to D) each being connected to a pull-up resistance (6E) and a pattern cut wiring (6F).

29. A driving circuit as claimed in any one of claims 21 to 28, characterised by terminal means (8) for monitoring the transfer clock signal (SCKI) at least at the final drive IC of said cascade of drive ICs (5).

30. A driving circuit as claimed in claim 29, characterised in that said modifying means (6) is adapted to modify said duty ratio of the generated transfer clock signal in dependence upon a result of monitoring at said terminal means (8).

31. A driving circuit as claimed in claim 29 or claim 30, characterised in that said terminal means (8) is located at an output of the final drive IC of said cascade of drive ICs (5).

32. A driving circuit as claimed in claim 29 or claim 30, characterised in that said terminal means (8) is located at an input of the final drive IC of said cascade of drive ICs (5).

33. A driving circuit as claimed in any one of claims 21 to 28, characterised in that a single said modifying means (7) is assigned to a block of said drive ICs (5).

34. A driving circuit as claimed in any one of claims 21 to 28, characterised in that one said modifying means (7) is assigned to each one of a plurality of blocks of said drive ICs (5).

35. A method of driving a recording head having a plurality of recording elements using a driving circuit, wherein said driving circuit comprises a plurality of drive ICs (5) connected in a cascade, each drive IC (5) having a plurality of drive signal lines as inputs, including an image signal line and a transfer clock signal line, and each drive IC (5) being connected to at least one recording element (1) for supplying a recording current thereto according to signals on said image signal line, the method comprising the steps of

supplying an image data signal (SI) to said image signal line of a first drive IC of said cascade of drive ICs (5) to cause said first drive IC to supply a recording current to the or each respective recording element (1), and generating and supplying a transfer clock signal (SCKI) to said transfer clock signal line to cause said image data signal (SI) to be transferred to a next one of said drive ICs (5) of said cascade of drive ICs (5),

characterised in that

the step of supplying a transfer clock signal (SCKI) includes modifying a duty ratio of the generated transfer clock signal (SCKI) supplied to said drive ICs (5) so that the duty ratio of said transfer clock signal (SCKI) at a final drive IC of said cascade of drive ICs (5) sufficient to transfer said image data signal (SI).

36. A method as claimed in claim 35 characterised in that the generated transfer clock signal (SCKI) has a duty ratio of 50%.

37. A method as claimed in claim 35 characterised in that the step of modifying a duty ratio of said generated transfer clock signal (SCKI) includes the step of counting a period corresponding to a duty ratio from which an input timing of the generated transfer clock signal (SCKI) is to be modified.

38. A method as claimed in any one of claims 35 to 37 characterised by the step of monitoring the transfer clock signal (SCKI) at least at the final drive IC of said cascade of drive ICs.

39. A method as claimed in claim 38, characterised in that said duty ratio of the generated transfer clock signal is modified in dependence upon a result of said monitoring.

40. A method as claimed in claim 38 or claim 39 characterised in that the transfer clock signal (SCKI) is monitored at an output of the final drive IC of said cascade of drive ICs.

41. A method as claimed in any one of claims 35 to 40 characterised in that the transfer clock signal is monitored for blocks of drive ICs of said cascade of drive ICs.

**Patentansprüche**

1. Aufzeichnungsgerät mit:

einer Vielzahl von Aufzeichnungselementen (1);
einer Vielzahl von zu einer Kaskade verschalteten Treiber-IC's (5), wobei jede Treiber-IC (5) eine Vielzahl von Ansteuersignalleitungen als Eingang hat, einschließlich einer Signalleitung für den Empfang eines Bilddatensignals (SI) und einer Signalleitung für den Empfang eines Übertragungstaktsignals (SCKI), das das Bilddatensignal zur nächsten der Treiber-IC's (5) überträgt, wobei jede der Treiber-IC's (5) dahingehend ausgelegt ist, einen Aufzeichnungsstrom entsprechend dem Bilddatensignal selektiv zu mindestens einem entsprechenden Aufzeichnungselement zuzuführen; und
einer Erzeugungseinrichtung zur Erzeugung des Übertragungstaktsignals (SCKI);

gekennzeichnet durch

eine Modifizierungseinrichtung (6, 7) für eine derartige Modifizierung des Taktfunktionsverhältnisses des erzeugten Übertragungstaktsignals (SCKI), das den Treiber-IC's (5) zugeführt wird, daß das Taktfunktionsverhältnis des Übertragungstaktsignals (SCKI) bei einer letzten Treiber-IC in der Kaskade der Treiber-IC's (5) ausreichend ist, das Bilddatensignal (SI) zu übertragen.

2. Aufzeichnungsgerät nach Anspruch 1, dadurch gekennzeichnet, daß sich die Modifizierungseinrichtung (6, 7) an einem Eingang der Kaskade der Treiber-IC's (5) befindet und das Übertragungstaktsignal (SCKI) an eine erste Treiber-IC in der Kaskade der Treiber-IC's (5) ausgibt.

3. Aufzeichnungsgerät nach Anspruch 1 oder 2, dadurch gekennzeichnet, daß die Erzeugungseinrichtung dahingehend angepaßt ist, das Übertragungstaktsignal (SCKI) mit einem Taktfunktionsverhältnis von 50% zu erzeugen.

4. Aufzeichnungsgerät nach Anspruch 1 oder 2, dadurch gekennzeichnet, daß die Modifizierungseinrichtung (6, 7) dahingehend angepaßt ist, das Übertragungstaktsignal (SCKI) so zu modifizieren, daß es ein Taktfunktionsverhältnis von 30% hat.

5. Aufzeichnungsgerät nach Anspruch 1 oder 2, dadurch gekennzeichnet, daß die Modifizierungseinrichtung (6) eine Zeitmeßeinrichtung enthält, die zur Messung einer Zeitspanne entsprechend eines Taktfunktionsverhältnisses dient, von der eine zeitliche Abstimmung des erzeugten Übertragungstaktsignals (SCKI) modifiziert werden muß.

6. Aufzeichnungsgerät nach Anspruch 5, dadurch gekennzeichnet, daß die Modifizierungseinrichtung (6) eine monostabile Kippstufe (6A) und eine mit der monostabilen Kippstufe (6A) verbundene zeitkonstante RC-Schaltung (6B) enthält.

7. Aufzeichnungsgerät nach Anspruch 5, dadurch gekennzeichnet, daß die Modifizierungseinrichtung (6) einen Zähler (6C) und ein JK Flip-Flop (6D) enthält.

8. Aufzeichnungsgerät nach Anspruch 7, dadurch gekennzeichnet, daß der Zähler (6C) voreingestellte Anschlüsse (A bis D) mit einer bestimmten Bit-Zahl hat, wobei jeder der voreingestellten Anschlüsse (A bis D) mit einem Endwiderstand (6E) und einer durch Auftrennen einstellbaren Verdrahtung (6F) verbunden ist.

9. Aufzeichnungsgerät nach einem der Ansprüche 1 bis 8, gekennzeichnet durch eine Anschlußeinrichtung (8) zur Überwachung des Übertragungstaktsignals (SCKI) zumindest bei der letzten Treiber-IC der Kaskade der Treiber-IC's (5).

10. Aufzeichnungsgerät nach Anspruch 9, dadurch gekennzeichnet, daß die Modifizierungseinrichtung (6) dahingehend angepaßt ist, das Taktfunktionsverhältnis des erzeugten Übertragungstaktsignals in Abhängigkeit eines Ergebnisses der Überwachung der Anschlußeinrichtung (8) zu modifizieren.

11. Aufzeichnungsgerät nach Anspruch 9 oder 10, dadurch gekennzeichnet, daß sich die Anschlußeinrichtung bei einem Ausgang der letzten Treiber-IC der Kaskade der Treiber-IC's befindet.

12. Aufzeichnungsgerät nach Anspruch 9 oder 10, dadurch gekennzeichnet, daß sich die Anschlußeinrichtung bei einem Eingang der letzten Treiber-IC der Kaskade der Treiber-IC's (5) befindet.

13. Aufzeichnungsgerät nach einem der Ansprüche 1 bis 8, dadurch gekennzeichnet, daß eine einzelne Modifizierungseinrichtung (7) einem Block von Treiber-IC's (5) zugewiesen ist.

14. Aufzeichnungsgerät nach einem der Ansprüche 1 bis 8, dadurch gekennzeichnet, daß jedem Block aus einer Vielzahl von Blöcken von Treiber-IC's (5) eine Modifizierungseinrichtung (7) zugewiesen ist.

15. Aufzeichnungsgerät nach einem der vorstehenden Ansprüche, dadurch gekennzeichnet, daß die Vielzahl von Aufzeichnungselementen (1) dahingehend angepaßt ist, mittels Tintenausstoß aufzuzeichnen.

16. Aufzeichnungsgerät nach Anspruch 15, dadurch gekennzeichnet, daß die Vielzahl von Aufzeichnungselementen (1) dahingehend angepaßt ist, Tinte mittels Benutzung von thermischer Energie auszustoßen.

17. Aufzeichnungsgerät nach einem der Ansprüche 1 bis 14, dadurch gekennzeichnet, daß das Aufzeichnungsgerät eine Textsystemeinrichtung aufweist.

18. Aufzeichnungsgerät nach einem der Ansprüche 1 bis 14, dadurch gekennzeichnet, daß das Aufzeichnungsgerät eine Faksimileeinrichtung aufweist, die eine Kommunikationsfunktion hat.

19. Aufzeichnungsgerät nach einem der Ansprüche 1 bis 14, dadurch gekennzeichnet, daß das Aufzeichnungsgerät eine Kopiereinrichtung aufweist, die eine Lesefunktion hat.

20. Aufzeichnungsgerät nach einem der Ansprüche 1 bis 14, dadurch gekennzeichnet, daß das Aufzeichnungsgerät eine Berechnungseinrichtung aufweist, die eine Berechnungsfunktion hat.

21. Ansteuerschaltung zur Ansteuerung eines Aufzeichnungskopfes, der eine Vielzahl von Aufzeichnungselementen (1) hat, mit:

   einer Vielzahl von zu einer Kaskade verschalteten Treiber-IC's (5), wobei jede Treiber-IC (5) eine Vielzahl von Steuersignalleitungen als Eingang hat, einschließlich einer Signalleitung für den Empfang eines Bilddatensignals und einer Signalleitung für den Empfang eines Übertragungstaktsignals, das das Bilddatensignal zur nächsten der Treiber-IC's (5) überträgt, wobei jede Treiber-IC (5) dahingehend ausgelegt ist, einen Aufzeichnungsstrom entsprechend dem Bilddatensignal selektiv zu mindestens einem entsprechenden Aufzeichnungselement (1) zuzuführen; und einer Erzeugungseinrichtung zur Erzeugung des Übertragungstaktsignals (SCKI); gekennzeichnet durch

   eine Modifizierungseinrichtung (6, 7) für eine derartige Modifizierung eines Taktfunktionsverhältnisses des erzeugten Übertragungstaktsignals (SCKI), das den Treiber-IC's (5) zugeführt wird, daß das Taktfunktionsverhältnis des Übertragungstaktsignals bei einer letzten Treiber-IC der Kaskade der Treiber-IC's (5) ausreichend ist, das Bilddatensignal zu übertragen.

22. Ansteuerschaltung nach Anspruch 21, dadurch gekennzeichnet, daß sich die Modifizierungseinrichtung (6, 7) an einem Eingang der Kaskade der Treiber-IC's (5) befindet und das Übertragungstaktsignal (SCKI) zu einer ersten Treiber-IC der Kaskade der Treiber-IC's (5) ausgibt.

23. Ansteuerschaltung nach Anspruch 21 oder 22, dadurch gekennzeichnet, daß die Erzeugungseinrichtung dahingehend angepaßt ist, das Übertragungstaktsignal (SCKI) mit einem Taktfunktionsverhältnis von 50% zu erzeugen.

24. Ansteuerschaltung nach Anspruch 21 oder 22, dadurch gekennzeichnet, daß die Modifizierungseinrichtung (6, 7) dahingehend angepaßt ist, das Übertragungstaktsignal (SCKI) so zu modifizieren, daß es ein Taktfunktionsverhältnis von 30% hat.

25. Aufzeichnungsgerät nach Anspruch 21 oder 22, dadurch gekennzeichnet, daß die Modifizierungseinrichtung (6) eine Zeitmeßeinrichtung enthält, die zur Messung einer Zeitspanne entsprechend eines Taktfunktionsverhältnisses dient, von der eine zeitliche Abstimmung des erzeugten Übertragungstaktsignals (SCKI) modifiziert werden muß.

26. Ansteuerschaltung nach Anspruch 24, dadurch gekennzeichnet, daß die Modifizierungseinrichtung (6) eine monostabile Kippstufe (6A) und eine mit der monostabilen Kippstufe (6A) verbundene zeitkonstante RC-Schaltung (6B) enthält.

27. Ansteuerschaltung nach Anspruch 25, dadurch gekennzeichnet, daß die Modifizierungseinrichtung (6) einen Zähler (6C) und ein JK Flip-Flop (6D) enthält.

28. Ansteuerschaltung nach Anspruch 27, dadurch gekennzeichnet, daß der Zähler (6C) voreingestellte Anschlüsse (A bis D) hat, die eine bestimmte Bit-Zahl haben, wobei jeder der voreingestellten Anschlüsse (A bis D) mit einem Endwiderstand (6E) und einer durch Auftrennen einstellbaren Verdrahtung (6F) verbunden ist.

29. Ansteuerschaltung nach einem der Ansprüche 21 bis 28, gekennzeichnet durch eine Anschlußeinrichtung (8) zur Überwachung des Übertragungstaktsignals (SCKI) zumindest bei der letzten Treiber-IC der Kaskade der Treiber-IC's (5).

30. Ansteuerschaltung nach Anspruch 29, dadurch gekennzeichnet, daß die Modifizierungseinrichtung (6) dahingehend angepaßt ist, das Taktfunktionsverhältnis des erzeugten Übertragungstaktsignals in Abhängigkeit eines Ergebnisses der Überwachung der Anschlußeinrichtung (8) zu modifizieren.

31. Ansteuerschaltung nach Anspruch 29 oder 30, dadurch gekennzeichnet, daß sich die Anschlußeinrichtung (8) an einem Ausgang der letzten Treiber-IC der Kaskade der Treiber-IC's (5) befindet.

32. Ansteuerschaltung nach Anspruch 29 oder 30, dadurch gekennzeichnet, daß sich die Anschlußeinrichtung (8) an einem Eingang der letzten Treiber-IC der Kaskade der Treiber-IC's befindet.

33. Ansteuerschaltung nach einem der Ansprüche 21 bis 28, dadurch gekennzeichnet, daß eine einzelne Modifizierungseinrichtung (7) einem Block von Treiber-IC's (5) zugewiesen ist.

34. Ansteuerschaltung nach einem der Ansprüche 21 bis 28, dadurch gekennzeichnet, daß jedem Block aus einer Vielzahl von Blöcken von Treiber-IC's (5) eine Modifizierungseinrichtung (7) zugewiesen ist.

35. Verfahren zur Ansteuerung eines Aufzeichnungskopfes, der eine Vielzahl von Aufzeichnungselementen hat, die eine Ansteuerschaltung benutzen, wobei die Ansteuerschaltung eine Vielzahl von zu einer Kaskade verschalteten Treiber-IC's (5) umfaßt, jede Treiber-IC (5) eine Vielzahl von Ansteuersignalleitungen als Eingang hat, einschließlich einer Signalleitung für ein Bilddatensignal und einer Signalleitung für ein Übertragungstaktsignal, jede Treiber-IC (5) mit mindestens einem Aufzeichnungselement (1) verbunden ist, damit dorthin ein Aufzeichnungsstrom entsprechend der Signale auf der Bildsignalleitung zugeführt wird, und das Verfahren die folgenden Schritte umfaßt:

Zuführung eines Bilddatensignals (SI) zu der Bildsignalleitung einer ersten Treiber-IC der Kaskade von Treiber-IC's (5), damit diese erste Treiber-IC veranlaßt wird, einen Aufzeichnungsstrom dem oder jedem entsprechenden Aufzeichnungselement (1) zuzuführen, und

Erzeugung und Zuführung eines Übertragungstaktsignals (SCKI) zur Übertragungstaktsignalleitung, damit das Bilddatensignal (SI) zu einer nächsten Treiber-IC (5) der Kaskade der Treiber-IC's (5) übertragen wird, dadurch gekennzeichnet, daß

der Schritt der Zuführung eines Übertragungstaktsignals (SCKI) eine derartige Modifizierung eines Taktfunktionsverhältnisses des erzeugten Übertragungstaktsignals (SCKI), das der Treiber-IC (5) zugeführt wird, beinhaltet, daß das Taktfunktionsverhältnis des Übertragungstaktsignals (SCKI) bei einer letzten Treiber-IC der Kaskade von Treiber-IC's (5) für eine Übertragung des Bilddatensignals (SI) ausreichend ist.

36. Verfahren nach Anspruch 35, dadurch gekennzeichnet, daß das erzeugte Übertragungstaktsignal (SCKI) ein Taktfunktionsverhältnis von 50% hat.

37. Verfahren nach Anspruch 35, dadurch gekennzeichnet, daß der Schritt der Modifizierung eines Taktfunktionsverhältnisses des erzeugten Übertragungstaktsignals (SCKI) den Schritt beinhaltet, eine Zeitspanne entsprechend eines Taktfunktionsverhältnisses zu messen, von der eine zeitliche Abstimmung des erzeugten Übertragungstaktsignals (SCKI) modifiziert werden muß.

38. Verfahren nach einem der Ansprüche 35 bis 37, gekennzeichnet durch den Schritt der Überwachung des Übertragungstaktsignals (SCKI) zumindest bei der letzten Treiber-IC der Kaskade der Treiber-IC's.

39. Verfahren nach Anspruch 38, dadurch gekennzeichnet, daß das Taktfunktionsverhältnis des erzeugten Übertragungstaktsignals in Abhängigkeit des Ergebnisses der Überwachung modifiziert wird.

40. Verfahren nach den Ansprüchen 38 oder 39, dadurch gekennzeichnet, daß das Übertragungstaktsignal (SCKI) an einem Ausgang der letzten Treiber-IC der Kaskade der Treiber-IC's überwacht wird.

41. Verfahren nach einem der Ansprüche 35 bis 40, dadurch gekennzeichnet, daß das Übertragungstaktsignal für Blöcke von Treiber-IC's der Kaskade der Treiber-IC's überwacht wird.

**Revendications**

1. Dispositif d'enregistrement comprenant :

   - une pluralité d'éléments d'enregistrement (1);
   - une pluralité de ICs d'attaque (5), montés en cascade, chaque dit IC d'attaque (5) possédant une pluralité de lignes de signal d'attaque comme entrées, comprenant une ligne de signal pour recevoir un signal de données d'image (SI) et une ligne de signal pour recevoir un signal d'horloge de transfert (SCKI) qui transfère ledit signal de données d'image sur un circuit suivant parmi lesdits ICs d'attaque (5), chacun desdits ICs d'attaque (5) étant configuré pour fournir un courant d'enregistrement, de façon sélective, à au moins un élément correspondant desdits éléments d'enregistrement selon ledit signal de données d'image; et un moyen de génération pour générer ledit signal d'horloge de transfert (SCKI); caractérisé par un moyen de modification (6, 7) pour modifier un taux d'utilisation du signal d'horloge de transfert (SCKI) généré fourni auxdits ICs d'attaque (5) de telle façon que le taux d'utilisation dudit signal d'horloge de transfert (SCKI) sur un IC d'attaque final dans ledit montage en cascade de ICs d'attaque (5) soit suffisant pour transférer ledit signal de données d'image (SI).

2. Dispositif d'enregistrement selon la revendication 1, caractérisé en ce que ledit moyen de modification (6, 7) est positionné sur une entrée dudit montage en cascade de ICs d'attaque (5) et fournit le signal d'horloge de transfert (SCKI) à un premier IC d'attaque dudit montage en cascade de ICs d'attaque (5).

3. Dispositif d'enregistrement selon la revendication 1 ou 2, caractérisé en ce que ledit moyen de génération est prévu pour générer ledit signal d'horloge de transfert (SCKI) avec un taux d'utilisation de 50 %.

4. Dispositif d'enregistrement selon la revendication 1 ou 2, caractérisé en ce que ledit moyen de modification (6, 7) est prévu pour modifier ledit signal d'horloge de transfert (SCKI) avec un taux d'utilisation de 30 %.

5. Dispositif d'enregistrement selon la revendication 1 ou 2, caractérisé en ce que ledit moyen de modification (6) comprend un moyen de compteur de temps pour compter une période correspondant à un taux d'utilisation à partir duquel un calage dans le temps d'entrée du signal d'horloge de transfert (SCKI) généré doit être modifié.

6. Dispositif d'enregistrement selon la revendication 5, caractérisé en ce que ledit moyen de modification (6) comprend un multivibrateur monostable (6A) et un circuit à constante de temps CR (6B) raccordé audit multivibrateur monostable (6A).

7. Dispositif d'enregistrement selon la revendication 5, caractérisé en ce que ledit moyen de modification (6) comprend un compteur (6C) et une bascule bistable JK (6D).

8. Dispositif d'enregistrement selon la revendication 7, caractérisé en ce que ledit compteur (6C) possède des bornes préétablies (A à D) possédant le nombre désigné de bits, lesdites bornes préétablies (A à D) étant chacune connectées à une résistance de démarrage (6E) et à un câblage de sélection (6F).

9. Dispositif d'enregistrement selon l'une quelconque des revendications 1 à 8, caractérisé par un moyen de borne (8) pour contrôler le signal d'horloge de transfert (SCKI) sur au moins le IC d'attaque final dudit montage en cascade de ICs d'attaque (5).

10. Dispositif d'enregistrement selon la revendication 9, caractérisé en ce que ledit moyen de modification (6) est prévu pour modifier ledit taux d'utilisation du signal d'horloge de transfert généré selon un résultat du contrôle sur ledit moyen de borne (8).

11. Dispositif d'enregistrement selon la revendication 9 ou 10, caractérisé en ce que ledit moyen de borne est situé sur une sortie du IC final d'attaque dudit montage en cascade de ICs d'attaque.

12. Dispositif d'enregistrement selon la revendication 9 ou 10, caractérisé en ce que ledit moyen de borne est situé sur une entrée du IC final d'attaque dudit montage en cascade de ICs d'attaque (5).

13. Dispositif d'enregistrement selon l'une quelconque des revendications 1 à 8, caractérisé en ce qu'un seul moyen de modification (7) est assigné à un bloc desdits ICs d'attaque (5).

14. Dispositif d'enregistrement selon l'une quelconque des revendications 1 à 8, caractérisé en ce que ledit moyen de modification (7) est assigné à chaque bloc d'une pluralité de blocs desdits ICs d'attaque (5).

15. Dispositif d'enregistrement selon l'une quelconque des revendications précédentes, caractérisé en ce que ladite pluralité d'éléments d'enregistrement (1) sont respectivement prévus pour enregistrer par décharge d'encre.

16. Dispositif d'enregistrement selon la revendication 15, caractérisé en ce que ladite pluralité d'éléments d'enregistrement (1) sont respectivement prévus pour décharger de l'encre à l'aide d'une énergie thermique.

17. Dispositif d'enregistrement selon l'une quelconque des revendications 1 à 14, caractérisé en ce que ledit dispositif d'enregistrement comprend un moyen de traitement de texte.

18. Dispositif d'enregistrement selon l'une quelconque des revendications 1 à 14, caractérisé en ce que ledit dispositif d'enregistrement comprend un moyen de télécopie possédant une fonction de communication.

19. Dispositif d'enregistrement selon l'une quelconque des revendications 1 à 14, caractérisé en ce que ledit dispositif d'enregistrement comprend un moyen de copie possédant une fonction de lecture.

20. Dispositif d'enregistrement selon l'une quelconque des revendications 1 à 14, caractérisé en ce que ledit dispositif d'enregistrement comprend un moyen de calculateur possédant une fonction de calcul.

21. Circuit d'attaque pour activer une tête d'enregistrement possédant une pluralité d'éléments d'enregistrement (1), le circuit d'attaque comprenant :

- une pluralité de ICs d'attaque (5), montés en cascade, chaque dit IC d'attaque (5) possédant une pluralité de lignes de signal d'attaque comme entrées, comprenant une ligne de signal pour recevoir un signal de données d'image et une ligne de signal pour recevoir un signal d'horloge de transfert qui transfère ledit signal de données d'image sur un circuit suivant parmi lesdits ICs d'attaque (5), chacun desdits ICs d'attaque (5) étant configuré pour fournir un courant d'enregistrement, de façon sélective, à au moins un élément correspondant desdits éléments d'enregistrement (1) selon ledit signal de données d'image; et un moyen de génération pour générer ledit signal d'horloge de transfert (SCKI);
caractérisé par un moyen de modification (6, 7) pour modifier un taux d'utilisation du signal d'horloge de transfert (SCKI) généré fourni auxdits ICs d'attaque (5) de telle façon que le taux d'utilisation dudit signal d'horloge de transfert sur un IC d'attaque final dans ledit montage en cascade de ICs d'attaque (5) soit suffisant pour transférer ledit signal de données d'image.

22. Circuit d'attaque selon la revendication 21, caractérisé en ce que ledit moyen de modification (6, 7) est positionné sur une entrée dudit montage en cascade de ICs d'attaque (5) et fournit le signal d'horloge de transfert (SCKI) à un premier IC d'attaque dudit montage en cascade de ICs d'attaque (5).

23. Circuit d'attaque selon la revendication 21 ou 22, caractérisé en ce que ledit moyen de génération est prévu pour générer ledit signal d'horloge de transfert (SCKI) avec un taux d'utilisation de 50 %.

24. Circuit d'attaque selon la revendication 21 ou 22, caractérisé en ce que ledit moyen de modification (6, 7) est prévu pour modifier ledit signal d'horloge de transfert (SCKI) avec un taux d'utilisation de 30 %.

25. Circuit d'attaque selon la revendication 21 ou 22, caractérisé en ce que ledit moyen de modification (6) comprend un moyen de compteur de temps pour compter une période correspondant à un taux d'utilisation à partir duquel un calage dans le temps d'entrée du signal d'horloge de transfert (SCKI) généré doit être modifié.

26. Circuit d'attaque selon la revendication 24, caractérisé en ce que ledit moyen de modification (6) comprend un multivibrateur monostable (6A) et un circuit à constante de temps CR (6B) raccordé audit multivibrateur monostable (6A).

27. Circuit d'attaque selon la revendication 25, caractérisé en ce que ledit moyen de modification (6) comprend un compteur (6C) et une bascule bistable JK (6D).

28. Circuit d'attaque selon la revendication 27, caractérisé en ce que ledit compteur (6C) possède des bornes préétablies (A à D) possédant le nombre désigné de bits, lesdites bornes préétablies (A à D) étant chacune connectées à une résistance de démarrage (6E) et à un câblage de sélection (6F).

29. Circuit d'attaque selon l'une quelconque des revendications 21 à 28, caractérisé par un moyen de borne (8) pour contrôler le signal d'horloge de transfert (SCKI) sur au moins le IC d'attaque final dudit montage en cascade de ICs d'attaque (5).

30. Circuit d'attaque selon la revendication 29, caractérisé en ce que ledit moyen de modification (6) est prévu pour modifier ledit taux d'utilisation du signal d'horloge de transfert généré selon un résultat du contrôle sur ledit moyen de borne (8).

31. Circuit d'attaque selon la revendication 29 ou 30, caractérisé en ce que ledit moyen de borne (8) est situé sur une sortie du IC final d'attaque dudit montage en cascade de ICs d'attaque (5).

32. Circuit d'attaque selon la revendication 29 ou 30, caractérisé en ce que ledit moyen de borne (8) est situé sur une entrée du IC final d'attaque dudit montage en cascade de ICs d'attaque (5).

33. Circuit d'attaque selon l'une quelconque des revendications 21 à 28, caractérisé en ce qu'un seul moyen de modification (7) est assigné à un bloc desdits ICs d'attaque (5).

34. Circuit d'attaque selon l'une quelconque des revendications 21 à 28, caractérisé en ce que ledit moyen de modification (7) est assigné à chaque bloc d'une pluralité de blocs desdits ICs d'attaque (5).

35. Procédé d'attaque d'une tête d'enregistrement possédant une pluralité d'éléments d'enregistrement utilisant un circuit d'attaque, dans lequel ledit circuit d'attaque comprend une pluralité de ICs d'attaque (5) montés en cascade, chaque IC d'attaque (5) possédant une pluralité de lignes de signal d'attaque comme entrées, comprenant une ligne de signal d'image et une ligne de signal d'horloge de transfert, et chaque IC d'attaque (5) étant connecté à au moins un élément d'enregistrement (1) pour fournir un courant d'enregistrement selon les signaux sur ladite ligne de signal d'image, le procédé comprenant les étapes suivantes :

- fournir un signal de données d'image (SI) à ladite ligne de signal d'image d'un premier IC d'attaque dudit montage en cascade de ICs d'attaque (5) pour amener ledit premier IC d'attaque à fournir un courant d'enregistrement à l'élément ou à chaque élément d'enregistrement respectif (1); et

- générer et fournir un signal d'horloge de transfert (SCKI) à ladite ligne de signal d'horloge de transfert pour provoquer le transfert dudit signal de données d'image (SI) sur un IC suivant desdits ICs d'attaque (5) dudit montage en cascade de ICs d'attaque (5); caractérisé en ce que l'étape consistant à fournir un signal d'horloge de transfert (SCKI) comprend la modification d'un taux d'utilisation du signal d'horloge de transfert généré (SCKI) fourni auxdits ICs d'attaque (5) de telle façon que le taux d'utilisation dudit signal d'horloge de transfert (SCKI) sur un IC d'attaque final dudit montage en cascade de ICs d'attaque (5) soit suffisant pour transférer ledit signal de données d'image (SI).

36. Procédé selon la revendication 35, caractérisé en ce que le signal d'horloge de transfert généré (SCKI) possède un taux d'utilisation de 50 %.

37. Procédé selon la revendication 35, caractérisé en ce que l'étape de modification d'un taux d'utilisation dudit signal d'horloge de transfert généré (SCKI) comprend une étape de comptage d'une période correspondant à un taux d'utilisation à partir duquel un calage dans le temps de l'entrée du signal d'horloge de transfert généré (SCKI) doit être modifié.

38. Procédé selon l'une quelconque des revendications 35 à 37, caractérisé par une étape de contrôle du signal d'horloge de transfert (SCKI) sur au moins le IC final d'attaque dudit montage en cascade de ICs d'attaque.

39. Procédé selon la revendication 38, caractérisé en ce que ledit taux d'utilisation du signal d'horloge de transfert (SCKI) généré est modifié selon un résultat dudit contrôle.

40. Procédé selon la revendication 38 ou 39, caractérisé en ce que le signal d'horloge de transfert (SCKI) est contrôlé sur une sortie du IC final d'attaque dudit montage en cascade de ICs d'attaque.

41. Procédé selon l'une quelconque des revendications 35 à 40, caractérisé en ce que le signal d'horloge de transfert (SCKI) est contrôlé pour des blocs de ICs d'attaque dudit montage en cascade de ICs d'attaque.

FIG.1 (PRIOR ART)

EP 0 567 328 B1

FIG.2 (PRIOR ART)

EP 0 567 328 B1

IMAGE DATA SIGNAL
TRANSFER CLOCK
(SCKI)

SERIAL IMAGE DATA
(SI)

tsc (SET-UP TIME 10~20nS)

# FIG.3 (PRIOR ART)

90%

SCKI

10%

tr    tf

# FIG.4 (PRIOR ART)

EP 0 567 328 B1

VDD

VT

SCKI ①

ⓐ NO.1 IC INPUT

VDD

VT

SCKO ①

ⓑ NO.1 IC OUTPUT

VDD

VT

SCKO ②

ⓒ NO.2 IC OUTPUT

VDD

VT

SCKO ⑺⑷

ⓓ NO.74 IC OUTPUT

# FIG.5 (PRIOR ART)

CLOCK OV

CAN NOT SHIFT THIS DATA

DATA

# FIG.6 (PRIOR ART)

FIG.7

EP 0 567 328 B1

ORDINARY
DUTY RATIO
(50%)

SCKI
(INPUT)

SI

⇒

FINAL STAGE
SCKO
(OUTPUT)

NG

SIn
$\left(\begin{array}{l}\text{FINAL STAGE}\\\text{INPUT}\end{array}\right)$

## FIG.8A

DUTY CONTROL

EMBODIMENT
DUTY RATIO
(30%)

SCKI′
(INPUT)

SI

⇒

FINAL STAGE
SCKO
(OUTPUT)

OK

SIn
$\left(\begin{array}{l}\text{FINAL STAGE}\\\text{INPUT}\end{array}\right)$

## FIG.8B

## FIG.9

SCKI′

(2) (1)

# FIG.10

FIG.11

FIG.12